# EUROPÄISCHE PATENTSCHRIFT

(11) **EP 2 655 143 B1**
(45) Veröffentlichungstag und Bekanntmachung des Hinweises auf die Patenterteilung: **11.05.2016**
(21) Anmeldenummer: 11805480.8
(22) Anmeldetag: 20.12.2011
(51) Int. Cl.: B60T 8/36

(54) **ELEKTROHYDRAULISCHES AGGREGAT**
ELECTROHYDRAULIC POWER UNIT
UNITÉ ÉLECTROHYDRAULIQUE

(30) Priorität: 22.12.2010 DE 102010063855
(43) Veröffentlichungstag der Anmeldung: 30.10.2013
(73) Patentinhaber: Robert Bosch GmbH, 70442 Stuttgart (DE)
(72) Erfinder: HUDITZ, Andreas, 87509 Immenstadt (DE); KAECHELE, Uwe, 72813 St. Johann-Wuertingen (DE)
(86) Internationale Anmeldenummer: PCT/EP2011/073320
(87) Internationale Veröffentlichungsnummer: WO 2012/084882

(56) Entgegenhaltungen:
- EP-A1- 1 586 491
- WO-A1-01/85511
- WO-A1-02/057124
- US-A- 6 011 341
- US-B1- 6 241 489

## Beschreibung

### Stand der Technik

Die vorliegende Erfindung betrifft ein elektrohydraulisches Aggregat zur Regelung und/oder Steuerung eines Bremsdrucks einer hydraulischen Fahrzeugbremsanlage.

Derartige Aggregate werden zur Blockierschutzregelung (ABS), zur Antischlupfregelung (ASR), zur Fahrdynamikregelung (FDR) und dergleichen verwendet. Ein derartiges Aggregat ist beispielsweise aus der DE 199 49 221 A1 bekannt. Das bekannte Aggregat weist einen Hydraulikblock auf, in dem außer anderen hydraulischen Bauelementen wie Magnetventilen eine Hydraulikpumpe untergebracht ist, die mit einem Elektromotor betrieben wird. An der dem Elektromotor gegenüberliegenden Seite des Hydraulikblocks ist ein elektronisches Steuergerät angebracht, das zur elektrischen Verbindung des Elektromotors mit dem elektronischen Steuergerät wenigstens einen Messerkontakt aufweist. Hierbei ist der wenigstens eine Messerkontakt mit Kunststoff umspritzt.

Die WO 01/85511 A1 betrifft eine Bremsvorrichtung mit integriertem Drucksensormodul, die beispielsweise in einem ABS eingesetzt werden kann.

Auch die US 6 241 489 B1 zeigt eine hydraulische Steuereinheit, die in einem ABS verwendet werden kann.

Ein elektrohydraulisches Aggregat mit den Merkmalen des Oberbegriffes des Anspruchs 1 ist sowohl aus der WO 01/85511 A1 als auch aus der US 6 241 489 B1 bekannt.

### Zusammenfassung der Erfindung

Es kann als Bedürfnis angesehen werden, die den Elektromotor mit dem elektronischen Steuergerät verbindenden elektrischen Kontakte erst beim Positionieren des elektronischen Steuergeräts mit diesen zu verbinden.

Dieses Bedürfnis kann durch den Gegenstand des unabhängigen Anspruchs gedeckt werden. Vorteilhafte Ausgestaltungen sind in den abhängigen Ansprüchen angegeben.

Die Erfindung betrifft ein elektrohydraulisches Aggregat zur Regelung und/oder Steuerung eines Bremsdrucks einer hydraulischen Fahrzeugbremsanlage. Das Aggregat weist einen eine Hydropumpe aufweisenden Hydraulikblock, an dem ein Elektromotor zum Antrieb der Hydraulikpumpe angebracht ist, ein elektronisches Steuergerät, das auf einer dem Elektromotor gegenüberliegenden Seite des Hydraulikblocks angebracht ist, und mindestens einen elektrischen Kontakt auf, wobei der elektrische Kontakt den Elektromotor elektrisch leitend mit dem elektronischen Steuergerät verbindet. Hierbei ist der elektrische Kontakt in einem stabförmigen Isolator aufgenommen. Der stabförmige Isolator ist zusammen mit dem darin aufgenommenen elektrischen Kontakt durch eine Durchgangsöffnung im Hydraulikblock geführt, die von der Seite des Hydraulikblocks, an der das Steuergerät angebracht ist, zu der Seite des Hydraulikblocks, an der der Elektromotor angebracht ist, durch den Hydraulikblock hindurch verläuft. Der stabförmige Isolator ist hierbei als ein Gehäuse ausgebildet, in das der elektrische Kontakt einschiebbar, spielfrei und unlösbar befestigbar ist. Der elektrische Kontakt ist als Messerkontakt oder Stiftkontakt ausgebildet, aufweisend einen Kontaktdom und ein Kontaktstück, wobei das Kontaktstück an einem einem ersten Ende gegenüberliegenden zweiten Ende des Kontaktdomes in der Längserstreckungsrichtung des Kontaktdomes ausgebildet ist. Der elektrische Kontakt weist eine Kontaktverbreiterung auf, wobei die Kontaktverbreiterung an dem ersten Ende des Kontaktdomes quer zu einer Längserstreckungsrichtung des Kontaktdomes ausgebildet ist. Der Kontaktdom ist S-förmig gebogen, derart, dass der Kontaktdom im Bereich der Kontaktverbreiterung und im Bereich des Kontaktstücks parallel zueinander verläuft.

Durch das Einschieben eines elektrischen Kontakts in ein Gehäuse ist es möglich, das elektronische Steuergerät erst nach der Montage des wenigstens einen elektrischen Kontakts mit diesem elektrisch leitend zu verbinden. Derartige elektrische Kontakte überbrücken in der Regel einen Abstand zwischen dem elektronischen Steuergerät und dem Elektromotor von einigen Zentimetern. Somit kann es als ein Vorteil der Erfindung angesehen werden, dass bei der Fertigung des elektronischen Steuergeräts nicht auch die weit aus dem elektronischen Steuergerät hinausragenden Kontakte zu montieren sind. Derartig weit vorstehende elektrische Kontakte können, wenn sie nur mit dem elektronischen Steuergerät verbunden und nicht weiter fixiert sind, leichter verbogen werden als solche elektrischen Steckkontakte, die lediglich kurz ausgeführt sind.

Als ein weiterer Vorteil der Erfindung kann angesehen werden, dass der elektrische Kontakt im Wesentlichen spielfrei im Gehäuse eingeführt ist. Im Wesentlichen spielfrei bedeutet hier, dass der elektrische Kontakt sich in dem Bereich, der durch den Gegenkontakt des Elektromotors gefasst wird, etwa 0,1 mm quer zu seiner Einsteckrichtung bewegen lässt. Dies ermöglicht insbesondere bei einer automatisierten Fertigung, bei der die einzelnen Bauteile oder Baugruppen gleichbleibend positioniert werden, dass der elektrische Kontakt des elektronischen Steuergeräts problemlos den entsprechenden Gegenkontakt des Elektromotors findet. Weiterhin als vorteilhaft kann angesehen werden, dass der elektrische Kontakt unlösbar mit dem Gehäuse verbunden ist. Hierdurch kann der elektrische Kontakt unter Krafteinwirkung mit dem Gegenkontakt des Elektromotors verbunden werden, ohne dass diese Kraft an das elektronische Steuergerät übertragen wird.

In einem weiteren Ausführungsbeispiel der Erfindung weist das elektronische Steuergerät eine Wanne auf, wobei die Wanne und das Gehäuse einstückig ausgeführt sind.

Somit ist es nun möglich, die Wanne des Steuergeräts mit dem mit einem elektrischen Kontakt bestückten Gehäuse, wobei sich das Gehäuse von einer zu montierenden Steuerelektronik wegerstreckt, auf das den Elektromotor aufnehmenden Teil des Hydraulikblocks sowie den dort vorinstallierten Magnetventilen aufzusetzen. Im Anschluss kann nunmehr die Steuerelektronik positioniert und mit dem wenigstens einen elektrischen Kontakt sowie den elektrischen Kontakten der Magnetventile elektrisch leitend verbunden werden.

In einem weiteren Ausführungsbeispiel der Erfindung ist der elektrische Kontakt als Messerkontakt oder Stiftkontakt ausgebildet, aufweisend einen Kontaktdom, eine Kontaktverbreiterung und ein Kontaktstück. Hierbei ist die Kontaktverbreiterung an einem ersten Ende des Kontaktdomes quer zu einer Längserstreckungsrichtung des Kontaktdomes ausgebildet. Das Kontaktstück ist an einem dem ersten Ende gegenüberliegenden zweiten Ende des Kontaktdomes in der Längserstreckungsrichtung des Kontaktdomes ausgebildet.

Vorzugsweise sind zwei Verbreiterungen an dem Kontaktdom ausgebildet. Die Form der Verbreiterung ist in der Regel rechteckig. Weiterhin weist die Verbreiterung eine Anschlussfahne auf, die mit der Steuerelektronik elektrisch leitend verbunden wird. Durch die zwei Verbreiterungen kann der elektrische Kontakt symmetrisch zu einer Mittelachse ausgestaltet werden. Weiterhin wird der elektrische Kontakt in der Regel aus Blech gefertigt. Hierbei muss die Verbreiterung nicht notwendigerweise in der gleichen Ebene verlaufen wie der Kontaktdom, sondern kann dem Kontaktdom gegenüber gewinkelt sein. Der Stiftkontakt unterscheidet sich vom Messerkontakt dahingehend, dass der Stiftkontakt zumindest im Bereich des Kontaktstücks einen quadratischen oder kreisrunden Querschnitt aufweist. Im Gegensatz hierzu hat der Messerkontakt zumindest im Bereich des Kontaktstücks einen rechteckigen Querschnitt, wobei in der Regel die Breitseite um ein Vielfaches größer ist als die Schmalseite.

In einem weiteren Ausführungsbeispiel der Erfindung ist eine in der Längserstreckungsrichtung des Kontaktdomes verlaufende Schmalseite der Kontaktverbreiterung als ein Tannenbaumprofil oder ein Wellenprofil ausgebildet.

Beim Einpressen derartig gestalteter elektrischer Kontakte in entsprechend hierfür vorgesehene Taschen in einem Kunststoffgehäuse verformen Tannenbaumprofile oder Wellenprofile den Kunststoff elastisch und/oder plastisch. Durch ein Fließen der Kunststoffe gelangt zumindest ein Teil des durch die Profile verdrängten Kunststoffes in zwischen dem Profil und dem Gehäuse erzeugte Hohlräume. Somit wird ohne Zerstörung des elektrischen Kontaktes oder des Gehäuses eine unlösbare Verbindung zwischen eben diesem elektrischen Kontakt und dem dazugehörigen Gehäuse erreicht. Das Tannenbaumprofil unterscheidet sich vom Wellenprofil dadurch, dass statt der Welle ein Keil ausgebildet ist, derart, dass seine schiefe Ebene zu dem Kontaktstück des elektrischen Kontakts weist. Abhängig von der Art des Kunststoffs, insbesondere seinem Elastizitätsmodul und/oder seinem Fließverhalten, kann die Verwendung des Wellenprofils geeigneter sein als die des Tannenbaumprofils.

In einem weiteren Ausführungsbeispiel der Erfindung ist der Kontaktdom S-förmig gebogen, derart, dass der Kontaktdom im Bereich der Kontaktverbreiterung und im Bereich des Kontaktstücks parallel zueinander verläuft.

Unter einer S-förmigen Biegung ist nicht nur zu verstehen, dass durch die Biegungen runde Ecken erzeugt werden. Vielmehr kann die S-förmige Biegung auch scharfkantig ausgeführt sein oder durch in der Regel stumpfes Fügen mehrerer Einzelteile erfolgen. Auch ist die S-förmige Biegung nicht darauf beschränkt, in einer Ebene zu erfolgen. Vielmehr kann beispielsweise eine erste Biegung in einer ersten Ebene und eine zweite Biegung in einer zweiten zu der ersten Ebene beispielsweise senkrechten Ebene erfolgen. Der Versatz der Kontaktverbreiterung und des Kontaktstücks beträgt in dem hier vorliegenden Beispiel 0,2 mm. Der Versatz kann jedoch auch jeden anderen Wert von etwa 0,1 mm bis etwa 1 mm annehmen. Derartige vorgebogene elektrische Kontakte können dann verwendet werden, wenn eine Verwendung von geraden elektrischen Kontakten dazu führen würde, dass bei der Montage der Gegenstecker nicht getroffen wird oder, wenn der Gegenstecker getroffen wird, es aufgrund der auf den Gegenstecker aufgebrachten Spannungen zu einer verringerten Zeitstandfestigkeit des Steckers, des Gegensteckers und/oder der damit bestückten gedruckten Schaltungen kommen würde. Solche Unzulänglichkeit können passieren, wenn beispielsweise bei zwei miteinander im Huckepack-Verfahren betriebenen und durch besagte Kontakte elektrisch miteinander verbundenen gedruckten Schaltungen ein Redesign durchgeführt wurde, aber jedoch nur eine der gedruckten Schaltungen in die Fertigung gelangt ist, da von der anderen gedruckten Schaltung noch ausreichend Lagerbestand vorhanden ist, der aufgebraucht werden soll. Auch kann ein solcher Versatz entstehen, wenn im Handel erhältliche gedruckte Schaltungen mit eigengefertigten gedruckten Schaltungen verbunden werden, wobei die im Handel erhältlichen gedruckten Schaltungen in einem anderen Rastersystem als die eigengefertigten gedruckten Schaltungen aufgelöst sind.

In einer weiteren Ausgestaltung der Erfindung weist das Gehäuse in seiner Längserstreckungsrichtung an einem ersten Ende einen Einführbereich auf, wobei der Einführbereich eine Tasche und eine Freisparung aufweist. Hierbei weist die Tasche Flächen auf, derart, dass die Kontaktverbreiterung durch die Flächen im Wesentlichen spielfrei in einer vorbestimmten Position aufnehmbar ist. Hierbei ist die Freisparung derart gestaltet, dass der Kontaktdom biege- und torsionskraftfrei in das Gehäuse einschiebbar ist und der Kontaktdom nach Einnahme der vorbestimmten Position biege- und torsionskraftfrei geführt ist.

Durch die in der Regel rechteckige Ausformung der Verbreiterung und der Tasche kann der elektrische Kontakt so weit in das Gehäuse eingeführt werden, bis eine Fläche der Tasche, nämlich die Grundfläche, ein weiteres Einschieben des Zwischenkontakts verhindert. Somit hat der elektrische Kontakt eine vorbestimmte Position eingenommen. Zum Erreichen dieses Vorteils müssen die Tasche und Kontaktverbreiterung nicht notwendigerweise rechteckig, sondern können beispielsweise auch konisch ausgeführt sein. Wie bereits weiter oben ausgeführt, wird durch ein Zusammenspiel der tannenbaumartig oder wellenartig ausgebildeten Schmalseite und der daran anschließenden Flächen der Kontaktverbreiterung im Zusammenspiel mit den Flächen der Tasche eine wenigstens im Wesentlichen spielfreie Verbindung geschaffen. Das Gehäuse kann in seinem Einführbereich den elektrischen Kontakt ausschließlich an der Kontaktverbreiterung fixieren. Somit kann das Gehäuse im Bereich des Kontaktdomes ausgespart werden. Insbesondere die biege- und torsionskraftfreie Aufnahme des elektrischen Kontakts im Gehäuse bewirkt, dass das Gehäuse keine Spannungen im Kontakt erzeugt und umgekehrt. Dies fördert die Zeitstandfestigkeit sowohl des Kontaktes als auch des Gehäuses, zumal wenn man bedenkt, dass aufgrund des Einsatzes derartiger elektrohydraulischen Aggregate im Motorraum eines Pkws oder Lkws sowohl das Gehäuse als auch der elektrische Kontakt permanent hohen Temperaturschwankungen und Erschütterungen ausgesetzt ist.

In einer weiteren Ausgestaltung der Erfindung weist das Gehäuse in der Längserstreckungsrichtung an einem dem ersten Ende gegenüberliegenden zweiten Ende einen Austrittsbereich auf, der mindestens einseitig durch einen Keil derart verengt ist, dass ein eingeschobener elektrischer Kontakt quer zur Längserstreckungsrichtung des elektrischen Kontakts im Wesentlichen spielfrei geführt ist.

Dieser Keil kann nur an einer Seite oder auch an zwei einander gegenüberliegenden Seiten im Austrittsbereich ausgeformt sein. Auch kann der Keil an jeder von zwei aneinander berührender Seiten ausgebildet sein. Dieser Keil ist so geformt, dass er die Durchführung des elektrischen Kontakts durch das Gehäuse erleichtert und nach Austritt des elektrischen Kontakts aus dem Austrittsbereich die Bewegungsfreiheit des elektrischen Kontakts quer zu dessen Erstreckungsrichtung derart einschränkt, dass das Kontaktstück des elektrischen Kontakts entweder spielfrei ist oder sein dem Gegenstecker zugewandte Ende ein Spiel von etwa 0,1 mm aufweist.

In einem weiteren Ausführungsbeispiel der Erfindung sind ein erster und ein zweiter gebogener elektrischer Kontakt in einem gemeinsamen Gehäuse aufgenommen, wobei die ersten Enden des ersten und des zweiten Kontaktdomes im Einführbereich angeordnet sind und voneinander durch einen ersten Abstand beabstandet sind. Die zweiten Enden des ersten und des zweiten Kontaktdomes sind im Austrittsbereich angeordnet und voneinander durch einen zweiten Abstand beabstandet. Die Beabstandung erfolgt derart, dass der zweite Abstand kleiner als der erste Abstand ist.

In diesem Ausführungsbeispiel werden zwei gleich geformte elektrische Kontakte in ein gemeinsames Gehäuse derart eingesetzt, dass die S-förmigen Auslenkungen der Kontakte einander gegenüberliegen. Bei dem hier beschriebenen Ausführungsbeispiel ist der erste Abstand von beispielsweise 5,0 mm auf einen zweiten Abstand von 4,6 mm verringert. Natürlich können durch anders gewählte Auslenkungen der elektrischen Kontakte sowie entsprechender Positionierung in unterschiedlich gestalteten Gehäusen Differenzen zwischen dem ersten Abstand und dem zweiten Abstand erzeugt werden, die im MillimeterBereich liegen. Auch kann Stecker und Gehäuse auch so gestaltet sein, dass der zweite Abstand größer als der erste Abstand ist.

In einem weiteren Ausführungsbeispiel der Erfindung sind die Freisparung des ersten Kontaktdomes und die der Freisparung des ersten Kontaktdomes zugewandte Freisparung des zweiten Kontaktdomes miteinander verbunden und bilden eine gemeinsame Freisparung aus, wobei sich die gemeinsame Freisparung bis zum Keil erstreckt.

Vorteilhafterweise werden hierdurch Materialanhäufungen im Gehäuse vermieden. Dies ist insbesondere vorteilhaft, wenn das Gehäuse im Kunststoffspritzverfahren hergestellt wird. Gleichmäßige Wandstärken können zu einer höheren Maßhaltigkeit des abgespritzten Teiles führen.

Die bisherigen Ausführungen bezogen sich darauf, dass das die elektrischen Kontakte aufnehmende Gehäuse aus einem nicht leitenden Kunststoff hergestellt ist. Natürlich kann das Gehäuse auch aus einem elektrisch leitenden Material gefertigt sein. Dann können die elektrischen Kontakte in den Bereichen, in denen sie das Gehäuse berühren, elektrisch nicht leitend ausgestattet sein. Diese elektrische Nichtleitfähigkeit könnte beispielsweise durch ein Beschichten beispielsweise mit Kunststoff erzeugt werden.

In der bisherigen Beschreibung wurde davon ausgegangen, dass ein S-förmig vorgebogener elektrischer Kontakt in einem entsprechend gestalteten Gehäuse aufgenommen ist. Natürlich wäre es auch möglich, einen planen, also nicht bereits vorgeformten, elektrischen Kontakt in ein Gehäuse einzubringen, wobei das Gehäuse den montierten elektrischen Kontakt S-förmig vorspannt.

Weitere Einzelheiten und Vorteile der Erfindung ergeben sich aus den Unteransprüchen im Zusammenhang mit der Beschreibung von Ausführungsbeispielen, die anhand der Zeichnungen eingehend erläutert werden.

Ausführungsformen der Erfindung werden nachfolgend mit Bezug auf die beigefügten Figuren beschrieben. Die Figuren sind lediglich schematisch und nicht maßstabsgetreu.

Kurze Beschreibung der Zeichnungen
- Figur 1: zeigt ein Gehäuse mit zwei elektrischen Kontakten und einer Steuerelektronik im Längsschnitt,
- Figur 2: zeigt das Gehäuse mit einem montierten elektrischen Kontakt und der Steuerelektronik im Längsschnitt,
- Figur 3: zeigt eine 3D-Ansicht des elektrischen Kontakts,
- Figur 4: zeigt eine Seitenansicht des elektrischen Kontakts,
- Figur 5: zeigt einen Ausschnitt aus einer Schmalseite einer Kontaktverbreiterung mit einem Tannenbaumprofil,
- Figur 6: zeigt einen Ausschnitt aus der Schmalseite der Kontaktverbreiterung mit einem Wellenprofil,
- Figur 7: zeigt einen Querschnitt durch das Gehäuse mit zwei elektrischen Kontakten,
- Figur 8: zeigt eine 3D-Ansicht des Gehäuses mit zwei montierten Kontakten im Schnitt und
- Figur 9: zeigt eine 3D-Ansicht des Gehäuses mit einem montierten elektrischen Kontakt und einem einzuführenden elektrischen Kontakt im Schnitt.

### Detaillierte Beschreibung beispielhafter Ausführungsformen

Gleiche oder ähnliche Komponenten in unterschiedlichen Figuren sind mit gleichen Bezugsziffern versehen.

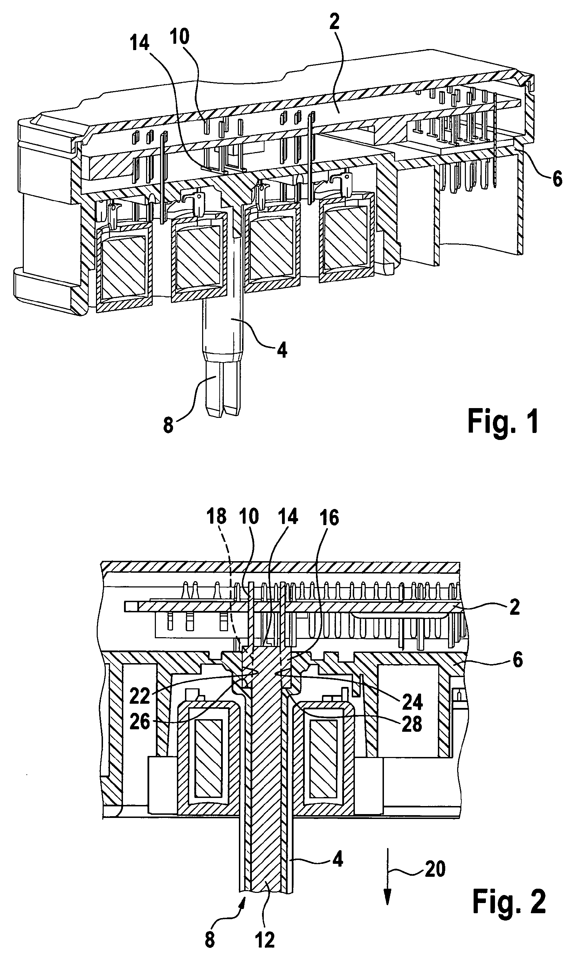

In Figur 1 ist ein elektronisches Steuergerät dargestellt. Das elektronische Steuergerät umfasst eine Steuerelektronik 2, die sich oberhalb einer Wanne 6 befindet. Mit der Wanne 6 verbunden und einstückig ausgeführt ist ein Gehäuse 4, welches zwei elektrische Kontakte 8 aufnimmt. Der elektrische Kontakt 8 weist ein erstes Ende 14 auf, an dem zwei Anschlussfahnen 10 ausgebildet sind, die mit der Steuerelektronik 2 elektrisch leitend verbunden sind.

Figur 2 zeigt einen Längsschnitt durch das Gehäuse 4, in dem ein elektrischer Kontakt 8 montiert und mit der Steuerelektronik 2 mittels zweier Anschlussfahnen 10 elektrisch leitend verbunden ist. Deutlich sichtbar ist, dass der elektrische Kontakt 8 aus einem Kontaktdom 12 und zwei Kontaktverbreiterungen 16 gebildet ist. Die Kontaktverbreiterungen 16 sind an einem ersten Ende 14 des Kontaktdomes 12 ausgebildet, wobei eine erste gestrichelte Linie 18 eine gedachte Begrenzungsebene der Kontaktverbreiterung 16 und des Kontaktdomes 12 darstellen soll. Weiterhin ersichtlich ist, dass sich das Gehäuse 4 in eine Richtung erstreckt, die von der Steuerelektronik 2 wegzeigt. Dies ist verdeutlicht durch einen Pfeil 20, der gleichzeitig die Längserstreckungsrichtung des elektrischen Kontakts 8 darstellen soll. Die Kontaktverbreiterung 16 befindet sich in einer Tasche 22, die sich in einem der Steuerelektronik 2 zugewandten Teilbereich des Gehäuses 4 befindet. Hierbei fixieren Seitenflächen 24 der Tasche 22 die Kontaktverbreiterung 16. Der elektrische Kontakt 8 befindet sich in einer vorbestimmten Position derart, dass eine Grundfläche 28 der Kontaktverbreiterung 16 in Kontakt mit einer Grundfläche 26 der Tasche 22 steht.

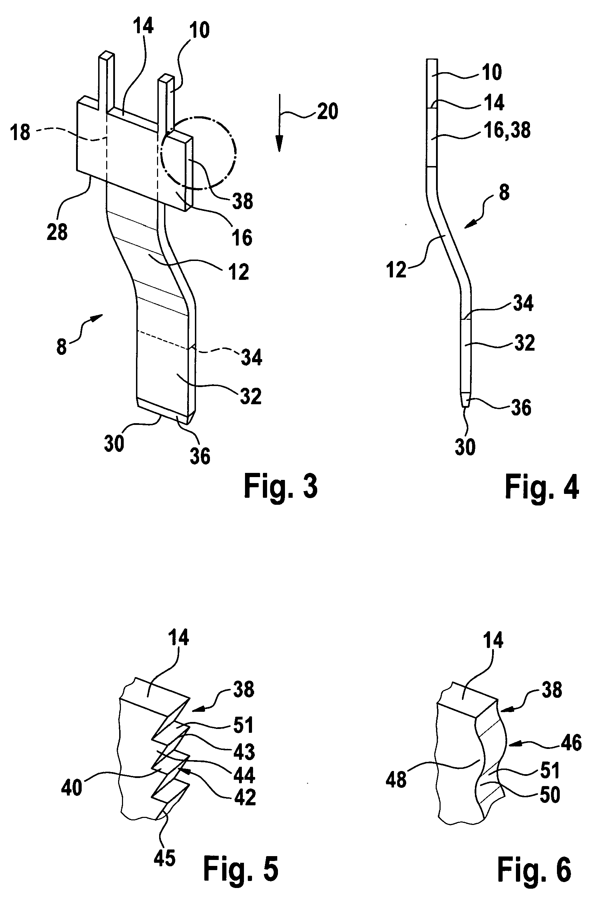

Figur 3 zeigt den elektrischen Kontakt 8 als Einzelteil, welcher S-förmig vorgebogen ist. Der elektrische Kontakt 8 ist aus Blech gefertigt und in seiner Gesamtheit einstückig ausgebildet. Die S-förmige Vorbiegung oder Auslenkung ist besonders gut in Figur 4 sichtbar. Der elektrische Kontakt 8 ist als ein Messerkontakt dargestellt, der sich von einem Stiftkontakt durch seinen rechteckigen Querschnitt im Bereich des Kontaktdomes unterscheidet. Der elektrische Kontakt 8 besteht aus dem Kontaktdom 12, der sich von dem ersten Ende 14 zu einem zweiten Ende 30 erstreckt. An dem ersten Ende 14 sind links und rechts je eine Kontaktverbreiterung 16 angeformt. Hierbei wird durch die erste gestrichelte Linie 18 angezeigt, wo der Kontaktdom 12 endet und die Kontaktverbreiterung 16 beginnt. Hierbei befinden sich der Kontaktdom 12 und die beiden Verbreiterungen 16 in einer Ebene. Natürlich können die Verbreiterungen 16 auch gewinkelt zu dem Kontaktdom 12 ausgebildet sein. An jeder Kontaktverbreiterung 16 ist eine Anschlussfahne 10 angeformt, die sich entgegen der durch den Pfeil 20 angedeuteten Längserstreckungsrichtung des elektrischen Kontakts 8 erstreckt. An seinem zweiten Ende 30 ist der Kontaktdom 12 als ein Kontaktstück 32 ausgebildet. Das Kontaktstück 32 erstreckt sich bis zu einer zweiten gestrichelten Linie 34. Das Kontaktstück 32 ist im Wesentlichen der Teil des Kontaktdomes 12, welcher aus dem hier nicht dargestellten Gehäuse 4 hervortritt und in einen ebenfalls hier nicht dargestellten Gegenkontakt eines Elektromotors aufgenommen wird. Das Kontaktstück 32 ist an seinem zweiten Ende 30 umlaufend mit einer Einführschräge 36 ausgestattet, welche ein Einführen in den Gegenkontakt erleichtert.

Eine Schmalseite 38 der Kontaktverbreiterung 16 ist in dem vorliegenden Ausführungsbeispiel profiliert. Eine mögliche Ausgestaltung dieser Schmalseite 38 zeigt Figur 5. Hier dargestellt ist ein sogenanntes Tannenbaumprofil 42. Deutlich sichtbar ist, dass das Tannenbaumprofil 42 aus mehreren übereinander angeordneten Keilen 44 besteht. Der Keil 44 besteht aus einer geraden Seite 40 und einer schrägen Seite 45. Hierbei weist die gerade Seite 44 zum ersten Ende 14 und die schräge Seite 45 in Richtung des zweiten in dieser Figur nicht dargestellten Endes 30. Als ein Rücksprung 51 wird ein Hohlraum bezeichnet, der von der geraden 44 und schrägen Seite 45 sowie einer gedachten, zwei Keilspitzen 43 verbindenden Ebene begrenzt ist.

Figur 6 zeigt eine weitere Ausgestaltung der Schmalseite 38, nämlich als Wellenprofil 46. Deutlich sichtbar ist, dass dieses Wellenprofil 46 aus Wellen 48 und Tälern 50 besteht. Hierbei stellt das Tal 50 gegenüber der Welle 48 den Rücksprung 51 dar. Sowohl das Wellenprofil 46 als auch das Tannenbaumprofil 42 erfüllen die gleiche Aufgabe, wenn der elektrische Kontakt 8 in dem Gehäuse 4 montiert wird. Beim Einführen der Verbreiterungen 16 in die hierfür vorgesehenen Taschen 22 des aus Kunststoff gefertigten Gehäuses 4 verformen die beiden Profile 42, 46 den sie berührenden Kunststoff des Kunststoffgehäuses 4 sowohl elastisch als auch plastisch. Durch das Fließverhalten des Kunststoffes füllt der verdrängte Kunststoff Hohlräume, die durch die Rücksprünge 51 erzeugt worden sind. Hierdurch wird der elektrische Kontakt 8 mit dem Gehäuse 4 unlösbar verbunden. Abhängig insbesondere von dem Elastizitätsmodul und dem Fließverhalten des für das Gehäuse 4 verwendeten Kunststoffs kann die Verwendung des Tannenbaumprofils 42 oder des Wellenprofils 46 geeigneter sein.

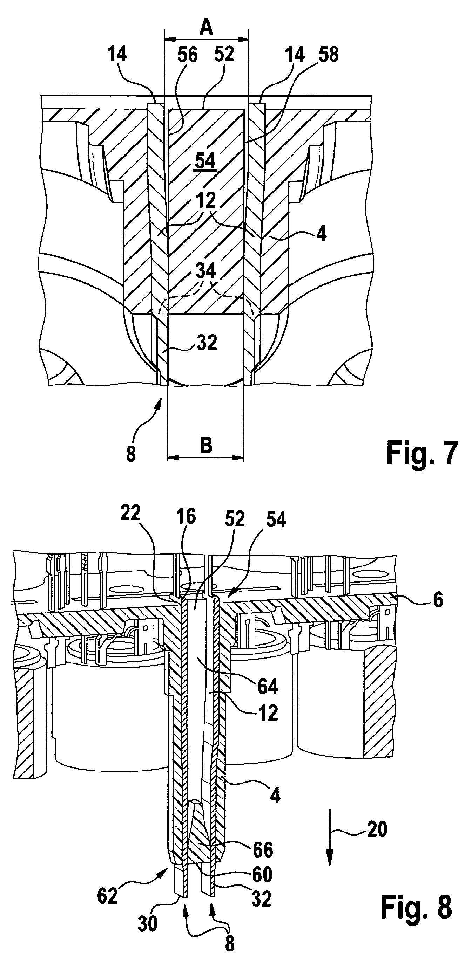

In Figur 7 ist das Zusammenspiel zweier S-förmig vorgebogener elektrischer Kontakte 8 im Zusammenspiel mit dem Gehäuse 4 dargestellt. Die elektrischen Kontakte 8 sind derart eingesetzt, dass die Verformungen des Kontaktdoms 12 zueinander weisen. An einem ersten Ende 52 des Gehäuses 4 ist ein Einführbereich 54 ausgebildet. Hierbei sind in dem Einführbereich 54 eine dem links dargestellten elektrischen Kontakt 8 zugehörige erste Aussparung 56 und eine dem rechten elektrischen Kontakt 8 zuzuordnende zweite Aussparung 58 ausgebildet. Eine derartige Anordnung zweier elektrischer Kontakte 8 ergibt, dass ein erster Abstand A, gemessen am ersten Ende 14 zwischen den beiden elektrischen Kontakten 8, von einem zweiten Abstand B, gemessen zwischen den beiden elektrischen Kontakten 8 im Bereich der Kontaktstellen 32, differiert. In dem hier vorliegenden Ausführungsbeispiel beträgt der erste Abstand A 5,0 mm und der zweite Abstand B 4,6 mm. Jeder elektrische Kontakt 8 ist im Bereich seines Kontaktdomes 12 um 0,2 mm vorgebogen. Natürlich könnte das Gehäuse 4 auch derart ausgebildet sein, dass die Auslenkungen der elektrischen Kontakte 8 in gleicher Richtung ausgerichtet sind und somit die beiden Abstände A und B gleich groß sind. Auch können die elektrischen Kontakte 8 derart in das Gehäuse 4 eingesetzt sein, dass der Abstand A kleiner als der Abstand B ist. Die beiden Aussparungen 56, 58 bewirken einerseits, dass der elektrische Kontakt 8 biege- und torsionskraftfrei in das Gehäuse 4 eingeführt werden kann. Andererseits bewirken die Aussparungen 56, 58, dass die elektrischen Kontakte 4, wenn sie ihre vorbestimmte Position eingenommen haben, biege- und torsionskraftfrei geführt sind. Eine derartige Ausgestaltung verspricht eine lange Zeitstandfestigkeit sowohl für das Gehäuse 4 als auch für den elektrischen Kontakt 8, insbesondere wenn man bedenkt, dass das elektrohydraulische Aggregat, in das sowohl das Gehäuse 4 als auch der elektrische Kontakt 8 integriert ist, im Motorraum eines Pkw oder Lkw untergebracht ist und damit großen Temperaturschwankungen sowie Erschütterungen unterliegt.

Figur 8 zeigt ein weiteres Ausführungsbeispiel der Erfindung. Hierbei sind sowohl der Kontakt 4 als auch das Gehäuse 8 geschnitten dreidimensional dargestellt. Im Wesentlichen unterscheidet sich die Figur 8 von der Darstellung der Figur 7 dadurch, dass die erste 56 und zweite Aussparung 58 miteinander zu einer gemeinsamen Aussparung 64 verbunden sind. Die im Wesentlichen spielfreie und unlösbare Befestigung des elektrischen Kontakts 8 im Einführbereich 54 des Gehäuses 4 erfolgt in dem hier vorliegenden Ausführungsbeispiel dadurch, dass ausschließlich die Kontaktverbreiterungen 16 im Gehäuse 4 durch die zugehörigen Taschen 22 fixiert sind und nicht auch der Kontaktdom 12. In einem in Längserstreckungsrichtung 20 dem Einführbereich 54 gegenüberliegenden Austrittsbereichs 62 des Gehäuses 4 befindet sich ein doppelter Keil 66, der zum einen bewirkt, dass das Kontaktstück 32 leicht durch das Gehäuse 4 hindurchgeführt werden kann. Zum anderen bewirkt der Keil 66, dass der elektrische Kontakt 8 quer zu seiner Längserstreckungsrichtung 20 zumindest im Wesentlichen spielfrei ist. Dies bedeutet, dass der elektrische Kontakt 8 entweder ganz spielfrei ist oder an seinem Ende 30 nur minimales Spiel im Bereich von 0,1 mm aufweist. Die hier dargestellte gemeinsame Aussparung 64 ermöglicht eine Gehäusegestaltung, bei der weitgehend Materialanhäufungen im Gehäuse 4 vermieden werden. Dies kann, insbesondere wenn das Gehäuse 4 als Kunststoffspritzteil ausgebildet ist, zu einer verbesserten Maßhaltigkeit des Gehäuses 4 führen. Figur 8 zeigt auch, dass die Kontaktstücke 32 in Längserstreckungsrichtung 20 des elektrischen Kontakts 8 aus dem Gehäuse 4 herausragen. Die Länge des Gehäuses 4 zwischen dem ersten Ende 52 und einem zweiten Ende 60 beträgt etwa 30mm. Die Länge des aus dem Gehäuse 4 herausragenden Kontaktstücks 32 beträgt etwa 25mm. Das erste Ende 14 des Kontaktdomes 12 schließt hierbei mit dem ersten Ende 52 des Gehäuses 4 bündig ab.

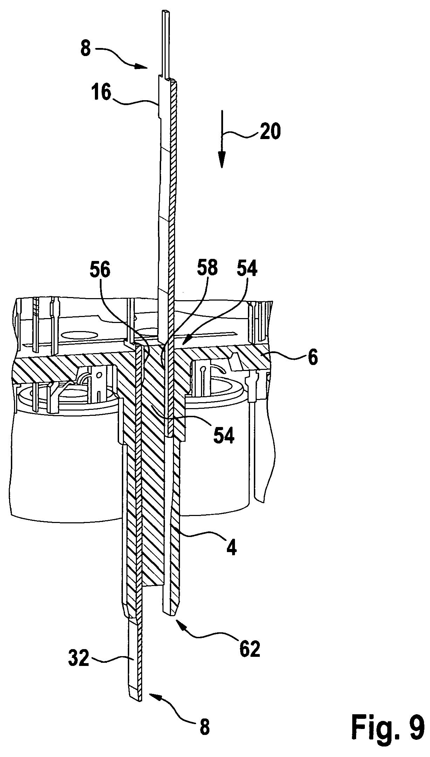

Figur 9 zeigt das aus Figur 7 bekannte Gehäuse mit zwei Aussparungen 56, 58. Hierbei ist der links dargestellte elektrische Kontakt 8 bereits in seiner Endlage positioniert und mit dem Gehäuse 4 im Wesentlichen spielfrei und unlösbar befestigt. Deutlich sichtbar ist das aus dem Austrittsbereich 62 in Längserstreckungsrichtung 20 ausgetretene Kontaktstück 32 dargestellt. Weiterhin ersichtlich ist, dass zur Montage der elektrische Kontakt 8 in Längserstreckungsrichtung 20 zunächst in den Einführbereich 54 des Gehäuses 4 eingeführt wird.

## Patentansprüche

1. Elektrohydraulisches Aggregat zur Regelung und/oder Steuerung eines Bremsdrucks einer hydraulischen Fahrzeugbremsanlage, mit einem eine Hydropumpe aufweisenden Hydraulikblock, an dem ein Elektromotor zum Antrieb der Hydraulikpumpe angebracht ist, mit einem elektronischen Steuergerät, das auf einer dem Elektromotor gegenüberliegenden Seite des Hydraulikblocks angebracht ist, und mit mindestens einem elektrischen Kontakt (8), der den Elektromotor elektrisch leitend mit dem elektronischen Steuergerät verbindet, wobei der elektrische Kontakt (8) in einem stabförmigen Isolator aufgenommen ist und wobei der stabförmige Isolator zusammen mit dem darin aufgenommenen elektrischen Kontakt (8) durch eine Durchgangsöffnung im Hydraulikblock geführt ist, die von der Seite des Hydraulikblocks, an der das elektronische Steuergerät angebracht ist, zu der Seite des Hydraulikblocks, an der der Elektromotor angebracht ist, durch den Hydraulikblock hindurch verläuft, wobei der stabförmige Isolator als ein Gehäuse (4) ausgebildet ist, in das der elektrische Kontakt (8) eingeschoben ist und spielfrei und unlösbar befestigt ist,
wobei der elektrische Kontakt (8) als Messerkontakt oder Stiftkontakt ausgebildet ist, aufweisend einen Kontaktdom (12) und ein Kontaktstück (32), wobei das Kontaktstück (32) an einem einem ersten Ende (14) gegenüberliegenden zweiten Ende (30) des Kontaktdomes (12) in der Längserstreckungsrichtung (20) des Kontaktdomes (12) ausgebildet ist,
**dadurch gekennzeichnet, dass**
der elektrische Kontakt eine Kontaktverbreiterung (16) aufweist, wobei die Kontaktverbreiterung (16) an dem ersten Ende (14) des Kontaktdomes (12) quer zu einer Längserstreckungsrichtung (20) des Kontaktdomes (12) ausgebildet ist, und
dass der Kontaktdom (12) S-förmig gebogen ist, derart, dass der Kontaktdom (12) im Bereich der Kontaktverbreiterung (16) und im Bereich des Kontaktstücks (32) parallel zueinander verläuft.

2. Elektrohydraulisches Aggregat nach Anspruch 1, **dadurch gekennzeichnet, dass** das elektronische Steuergerät eine Wanne (6) aufweist, wobei die Wanne (6) und das Gehäuse (4) einstückig ausgeführt sind.

3. Elektrohydraulisches Aggregat nach Anspruch 1 oder 2, **dadurch gekennzeichnet, dass** eine in der Längserstreckungsrichtung (20) des Kontaktdomes (12) verlaufende Schmalseite (38) der Kontaktverbreiterung (16) als ein Tannenbaumprofil (42) oder ein Wellenprofil (46) ausgebildet ist.

4. Elektrohydraulisches Aggregat nach einem der vorhergehenden Ansprüche, **dadurch gekennzeichnet, dass** das Gehäuse (4) in seiner Längserstreckungsrichtung an einem ersten Ende (52) einen Einführbereich (54) aufweist, wobei der Einführbereich (54) eine Tasche (22) und eine Freisparung (56, 58) aufweist, wobei die Tasche (22) Flächen (24, 26) aufweist, derart, dass die Kontaktverbreiterung (16) durch die Flächen (24, 26) im Wesentlichen spielfrei in einer vorbestimmten Position aufnehmbar ist, wobei die Freisparung (56,58) derart gestaltet ist, dass der Kontaktdom (12) biege- und torsionskraftfrei in das Gehäuse (4) einschiebbar ist und der Kontaktdom (12) nach Einnahme der vorbestimmten Position biege- und torsionskraftfrei geführt ist.

5. Elektrohydraulisches Aggregat nach Anspruch 4, **dadurch gekennzeichnet, dass** das Gehäuse (4) in der Längserstreckungsrichtung an einem dem ersten Ende (52) gegenüberliegenden zweiten Ende (60) einen Austrittsbereich (62) aufweist, der mindestens einseitig durch einen Keil (66) derart verengt ist, dass ein eingeschobener elektrischer Kontakt (8) quer zur Längserstreckungsrichtung (20) des elektrischen Kontakts (8) im Wesentlichen spielfrei geführt ist.

6. Elektrohydraulisches Aggregat nach Anspruch 5, **dadurch gekennzeichnet, dass** der elektrische Kontakt (8) als ein erster Kontakt (8) und ein zweiter gebogener elektrischer Kontakt (8) in dem gemeinsamen Gehäuse (4) aufgenommen sind, wobei die ersten Enden (14) des ersten (12) und des zweiten Kontaktdomes (12) im Einführbereich (54) angeordnet sind und voneinander durch einen ersten Abstand (A) beabstandet sind, wobei die zweiten Enden (30) des ersten (12) und des zweiten Kontaktdomes (12) im Austrittsbereich (62) angeordnet sind und voneinander durch einen zweiten Abstand (B) beabstandet sind, derart, dass der zweite Abstand (B) kleiner als der erste Abstand (A) ist.

7. Elektrohydraulisches Aggregat nach Anspruch 6, **dadurch gekennzeichnet, dass** die Freisparung (56) des ersten Kontaktdomes (12) und die der Freisparung (56) des ersten Kontaktdomes (12) zugewandte Freisparung (58) des zweiten Kontaktdomes (12) miteinander verbunden sind und eine gemeinsame Freisparung (64) ausbilden, wobei sich die gemeinsame Freisparung (64) bis zum Keil (66) erstreckt.

## Claims

1. An electrohydraulic assembly for performing a closed-loop and/or open-loop control of a brake pressure of a hydraulic vehicle brake system, having a hydraulic block which has a hydraulic pump and on which an electric motor for driving the hydraulic pump is mounted, having an electronic control device which is mounted on a side of the hydraulic block opposite the electric motor, and having at least one electric contact (8) which connects the electric motor in an electrically conductive fashion to the electronic control device, wherein the electric contact (8) is accommodated in a rod-shaped insulator, wherein the rod-shaped insulator is guided, together with the electric contact (8) accommodated therein, through a through-opening in the hydraulic block, which through-opening runs through the hydraulic block, from the side of the hydraulic block on which the electronic control device is mounted to the side of the hydraulic block on which the electric motor is mounted, wherein the rod-shaped insulator is embodied as a housing (4) into which the electric contact (8) is inserted, and said electric contact is attached in a play-free and non-releasable fashion, wherein the electric contact (8) is embodied as a blade contact or pin contact, having a contact dome (12) and a contact piece (32), wherein the contact piece (32) is formed at a second end (30) of the contact dome (12), lying opposite a first end (14), in the direction (20) of the longitudinal extent of the contact dome (12),
**characterised**
**in that**
the electric contact has a contact widened portion (16), wherein the contact widened portion (16) is formed at the first end (14) of the contact dome (12) transversely with respect to a direction (20) of longitudinal extent of the contact dome (12), and
**in that** the contact dome (12) is bent in an S shape in such a way that the contact dome (12) runs parallel in the region of the contact widened portion (16) and in the region of the contact piece (32).

2. Electrohydraulic assembly according to Claim 1, **characterised in that** the electronic control device has a trough (6), wherein the trough (6) and the housing (4) are embodied in one piece.

3. Electrohydraulic assembly according to Claim 1 or 2, **characterised in that** a narrow side (38) of the contact widened portion (16) which runs in the direction (20) of longitudinal extent of the contact dome (12) is embodied as a fir tree profile (42) or a wave profile (46).

4. Electrohydraulic assembly according to one of the preceding claims, **characterised in that** the housing (4) has an insertion region (54) at a first end (52) in its direction of longitudinal extent, wherein the insertion region (54) has a pocket (22) and a cutout (56, 58), wherein the pocket (22) has faces (24, 26) such that the contact widened portion (16) can be accommodated in a predetermined position essentially free of play by the faces (24, 26), wherein the cutout (56, 58) is configured in such a way that the contact dome (12) can be slid into the housing (4) free of bending force and torsional force, and the contact dome (12) is guided free of bending force and torsional force after the assumption of the predetermined position.

5. Electrohydraulic assembly according to Claim 4, **characterised in that** in the direction of the longitudinal extent the housing (4) has, at a second end (60) lying opposite the first end (52), an outlet region (62) which is tapered at least on one side by a wedge (66) in such a way that a slid-in electric contact (8) is guided essentially free of play transversely with respect to the direction (20) of the longitudinal extent of the electric contact (8).

6. Electrohydraulic assembly according to Claim 5, **characterised in that** the electric contact (8), as a first contact (8), and a second bent electric contact (8) are accommodated in the common housing (4), wherein the first ends (14) of the first contact dome (12) and of the second contact dome (12) are arranged in the insertion region (54) and are spaced apart from one another by a first distance (A), wherein the second ends (30) of the first contact dome (12) and of the second contact dome (12) are arranged in the outlet region (62) and are spaced apart from one another by a second distance (B) such that the second distance (B) is shorter than the first distance (A).

7. Electrohydraulic assembly according to Claim 6, **characterised in that** the cutout (56) of the first contact dome (12) and the cutout (58), facing the cutout (56) of the first contact dome (12), of the second contact dome (12) are connected to one another and form a common cutout (64), wherein the common cutout (64) extends as far as the wedge (66).

## Revendications

1. Unité électro-hydraulique pour la régulation et/ou la commande d'une pression de freinage d'un système de freinage hydraulique de véhicule, comprenant un bloc hydraulique qui présente une pompe hydraulique, bloc sur lequel un moteur électrique est monté pour entraîner la pompe hydraulique, comprenant un appareil de commande électronique qui est monté sur un côté du bloc hydraulique qui est opposé au moteur électrique, et comprenant au moins un contact électrique (8) qui relie de manière électriquement conductrice le moteur électrique à l'appareil de commande électronique, dans lequel le contact électrique (8) est logé dans un isolateur en forme de tige et dans lequel l'isolateur en forme de tige est guidé dans le bloc hydraulique conjointement avec le contact électrique (8) qui y est logé par une ouverture de passage, qui s'étend à travers le bloc hydraulique à partir du côté du bloc hydraulique sur lequel est monté l'appareil de commande électronique, jusqu'au côté du bloc hydraulique sur lequel est monté le moteur électrique, dans lequel l'isolateur en forme de tige est réalisé sous la forme d'un boîtier (4) dans lequel le contact électrique (8) est inséré et est fixé sans aucun jeu et de manière inamovible, dans lequel le contact électrique (8) est réalisé sous la forme d'un contact à lame ou d'un contact mâle, comportant un dôme de contact (12) et une pièce de contact (32), dans lequel la pièce de contact (32) est réalisée sur une seconde extrémité (30) du dôme de contact (12) qui est opposée à une première extrémité (14) dans la direction d'extension longitudinale (20) du dôme de contact (12), **caractérisée en ce que** le contact électrique comprend une partie de contact élargie (16), dans laquelle la partie de contact élargie (16) est réalisée, à la première extrémité (14) du dôme de contact (12), transversalement à une direction d'extension longitudinale (20) du dôme de contact (12), et
**en ce que** le dôme de contact (12) est incurvé selon la forme d'un S de manière à ce que le dôme de contact (12) dans la zone de la partie de contact élargie (16) et dans la zone de la pièce de contact (32) s'étende parallèlement à lui-même.

2. Unité électro-hydraulique selon la revendication 1, **caractérisée en ce que** l'appareil de commande électronique comporte une cuve (6), dans laquelle la cuve (6) et le boîtier (4) sont réalisés en une seule pièce.

3. Unité électro-hydraulique selon la revendication 1 ou 2, **caractérisée en ce qu'**un petit côté (38) de la partie de contact élargie (16), s'étendant dans la direction d'extension longitudinale (20) du dôme de contact (12), est réalisé sous la forme d'un profil en sapin (42) ou d'un profil en arbre (46).

4. Unité électro-hydraulique selon l'une quelconque des revendications précédentes, **caractérisée en ce que** le boîtier (4) présente une zone d'insertion (54) à une première extrémité (52) dans sa direction d'extension longitudinale, dans laquelle la zone d'insertion (54) comporte une poche (22) et un évidement (56, 58), dans laquelle la poche (22) présente des surfaces (24, 26) telles que la partie de contact élargie (16) puisse être reçue à travers les surfaces (24, 26) sensiblement sans aucun jeu à une position prédéterminée, dans laquelle l'évidement (56, 58) est réalisé de manière à ce que le dôme de contact (12) puisse être inséré sans aucune force de flexion ou de torsion dans le boîtier (4) et à ce que le dôme de contact (12) soit guidé sans aucune force de flexion et de torsion après que la position prédéterminée a été atteinte.

5. Unité électro-hydraulique selon la revendication 4, **caractérisée en ce que** le boîtier (4) comporte à une seconde extrémité (60) opposée à la première extrémité (52) dans la direction d'extension longitudinale, une zone de sortie (62) qui est rétrécie d'au moins un côté par un coin (66) de manière à ce qu'un contact électrique (8) inséré soit guidé sensiblement sans aucun jeu transversalement à la direction d'extension longitudinale (20) du contact électrique (8).

6. Unité électro-hydraulique selon la revendication 5, **caractérisée en ce que** le contact électrique (8), en tant que premier contact (8), et un second contact électrique (8) incurvé sont logés dans le boîtier commun (4), dans laquelle les premières extrémités (14) des premier (12) et second dômes de contact (12) sont disposées dans la zone d'insertion (54) et sont espacés l'un de l'autre d'une première distance (A) dans laquelle les secondes extrémités (30) des premier (12) et second dômes de contact (12) sont disposées dans la zone de sortie (62) et sont espacées l'une de l'autre d'une seconde distance (B) de manière à ce que la seconde distance (B) soit inférieure à la première distance (A).

7. Unité électro-hydraulique selon la revendication 6, **caractérisée en ce que** l'évidement (56) du premier dôme de contact (12) et l'évidement (58) du second dôme de contact (12), tourné vers l'évidement (56) du premier dôme de contact (12), sont reliés l'un à l'autre et forment un évidement (64) commun, dans lequel l'évidement (64) commun s'étend jusqu'au coin (66).
